(19)

Europäisches
Patentamt
European
Patent Office
Office européen
des brevets

(11) **EP 4 075 325 A1**

(12) **EUROPEAN PATENT APPLICATION**

(43) Date of publication:
**19.10.2022 Bulletin 2022/42**

(21) Application number: **21461534.6**

(22) Date of filing: **15.04.2021**

(51) International Patent Classification (IPC):
**G06K 9/00** (2022.01)       **G06K 9/62** (2022.01)
**G06K 9/46** (2006.01)

(52) Cooperative Patent Classification (CPC):
**G06K 9/6259; G06K 9/6271; G06V 10/454;
G06V 20/695; G06V 20/698;** G06V 2201/03

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ardigen S.A.**
**30-394 Krakow (PL)**

(72) Inventors:
• **MAKAREVYCH, Sergii**
  **30-012 Krakow (PL)**
• **ZIELINSKI, Bartosz**
  **31-514 Krakow (PL)**
• **OZIMEK, Wojciech**
  **30-376 Krakow (PL)**

• **CHALUPCZAK, Michal**
  **30-147 Krakow (PL)**
• **BRACHA, Anna**
  **30-126 Krakow (PL)**
• **BOROWA, Adriana**
  **30-348 Krakow (PL)**
• **DANEL, Tomasz**
  **30-312 Krakow (PL)**
• **BIEL, Mikolaj**
  **32-440 Sulkowice (PL)**
• **RYMARCZYK, Dawid**
  **30-384 Krakow (PL)**
• **KRAWIEC, Tomasz**
  **30-363 Krakow (PL)**

(74) Representative: **Patpol Kancelaria Patentowa Sp.
z o.o.
Nowoursynowska 162J
02-776 Warszawa (PL)**

(54) **METHOD AND SYSTEM FOR THE CLASSIFICATION OF HISTOPATHOLOGICAL IMAGES
BASED ON MULTIPLE INSTANCE LEARNING**

(57)    The subject of the invention is a method and a system for the classification of histopathological images. The invention is applicable in medicine for assessing the stage of undesirable changes in human tissue imaged under a microscope. The invention also relates to a method and a system for training a system for classification of histopathological images. A method of classifying microscope pictures, including the step (10') of preprocessing the microscope image, including the step (12') of dividing the microscope image into a set of n patches, wherein each of the n patches forming the microscope image is assigned the same label assigned by the whole microscope image, is characterised in that it comprises the step (30') of delivering the pre-processed microscope image to the image feature representation module (300') containing the trained convolutional neural network, the step (40') of extracting the patch feature vector from the image feature representation module (300) for each of the n patches of each microscope image to obtain a bag including n patch feature vectors, the step (50') of delivering the bag including n patch feature vectors to the classification module (500'), where the value of n may differ depending on the bag, and the classification module (500') includes at least one feature vector aggregation module (501a', 501b', 501c') to obtain a single representation vector of microscope image features having the same size as the size of each of the vectors constituting the bag, and at least one classifier (502a', 502b', 502c').

EP 4 075 325 A1

System **900** for training a system for the classification of microscope images based on multiple-instance learning

Memory **505** for storing microscope images

Image preprocessing module **100**

Division into patches **101**

Segmentation **102**

Normalisation **103**

Standardisation **107**

Module **105** for selecting patches without marker residues

Module **106** for selecting patches with sufficient acutance

Module **104** for selecting patches with predominant tissue presence

Learning data **200**

Test data **200b**

Training data **200a**

Validation data 1 **200c**

Training data 1

Training data 1

Training data 2

Validation data 2 **200c**

Training data 2

Training data 3

Training data 3

Validation data 3 **200c**

Image feature representation module **300**

CNN

Patch feature vector extraction module **400**

Classification module **500**

Feature vector aggregation module **501**

Fisher Vector **501a**

RNN **501b** of GRU/ LSTM/Transformer type

Aggregation module **501c** with the attention mechanism

Classifier **502**

Random forest **502a**

Shallow neural network **502b**

Shallow neural network **502c**

**Fig.6**

2

**Description**

The invention relates to a method and a system for classification of histopathological images, i.e. more particularly for assessing the stage of a pathomorphological lesion on the basis of the histopathological images. The invention is applicable in medicine for assessing the stage of undesirable changes in human tissue imaged under a microscope, more particularly for automatic grading of the histopathological image of biopsy samples for the purpose of making a medical diagnosis. The invention also relates to a method and a system for training a system for classification of histopathological images based on multiple instance learning.

The classification of medical images can be binary or multiclass. In the case of binary classification, for example, the assessment of whether the tissue in the image is affected or not, or the assessment of whether the affected tissue in the image is a malignant tumour or not, is performed. In the multiclass classification, the so-called grading, the tissue in the image is assigned to a given class according to the appropriate scale depending on the severity of the lesion. In practice, different scales for grading pathomorphological lesions are used, depending on the disease and the type of tissue. For example, this could be the Gleason scoring. In practice, the determination of tissue grade in a medical image is a very difficult task for a human and requires many years of practice. Moreover, even an experienced histopathologist will never be 100% effective in assigning an appropriate scale value to a given image. In the case of histological picture (a term used interchangeably with the term of images), the part of the image which is the most important for gradation may constitute only a small percentage of the whole image. Therefore, for many years, automatic and reliable grading methods, independent of human skills, have been sought.

Methods and systems for automatic, i.e. not requiring human participation, grading of tissues visualised in medical pictures, in particular histopathological ones are known in the prior art. For this purpose, techniques of the so-called computer vision with the use of deep neural networks have been used for a long time.

As microscope images are images containing a huge amount of information and processing them as a whole would require enormous computational power, the so-called multiple instance learning method was developed, thanks to which the image is divided into the so-called many instances, or smaller fragments of the image, which are separately classified in terms of whether they have a positive feature or not, and then on their basis the final binary classification of the whole image is determined. In multiple instance learning, it is assumed that the class of the tile is unknown, but if the whole image belonged to a given class with a positive feature, it is assumed that at least one tile must belong to this class with a positive feature, which in practice means that, the probability with the highest value calculated for one of the tiles must be close to 1, otherwise it must be close to 0. These assumptions can be modified by adopting that several tiles with the highest probability value of belonging to a class with a positive feature may determine the final classification of the whole image.

Such a method is known, for example, from the document US20190295252. The method disclosed in the document US20190295252 to train a system for multiclass classification of high-resolution microscope images based on multiple instance learning methods involves the preparation of a training and test dataset from an available collection of high-resolution microscope images, the pictures being divided into instances called tiles, which in the first stage of training is provided to the convolutional neural network, NN, which constitutes an inference system for the determination of belonging to one of the two classes for each tile, then the tiles with the highest values of the calculated probability of belonging to one of the two classes are selected and provided in the second stage of training to the prediction aggregation system which is a recurrent neural network connected to a classifier. However, this method of classification is mainly dedicated to binary classification and is not directly applicable to multiclass classification, as it would provide classification accuracy that is not useful for diagnostic purposes.

The attempts to apply the multiple instance learning method to multiclass classification are also known in the prior art. The document WO20222985 discloses a method and a system for multiclass classification of high-resolution microscope images based on the multiple instance learning method and soft attention, as well as a method for training a system for multiclass classification of high-resolution microscope images based on the multiple instance learning method and soft attention. The method of training a system for the multiclass classification of high-resolution microscope pictures based on the multiple instance learning and soft-attention methods disclosed in the document WO20222985 includes the preparation of a training and test dataset from an available collection of high-resolution microscope pictures, where the pictures are divided into instances called tiles, which are assigned the label of the whole picture. Further, the method comprises training an end-to-end convolutional neural network, CNN, acting as an image feature representation module, simultaneously connected to at least one soft attention module, and further to a fully connected classifier. As a trained system for classifying high-resolution microscope images uses the soft attention mechanism, it dynamically identifies regions of interest in the high-resolution image and classifies the whole microscope image based on only selected regions of interest.

The method of multiclass classification, simultaneously disclosed in the document WO20222985, comprises providing high-resolution microscope images, analysing the images, wherein analysing the images involves dividing the images into a grid of subregions (instances) called tiles and sending them to a trained convolutional neural network to extract feature maps for each tile, then uploading the extracted feature maps for each tile to the soft attention module to generate the attention map for each tile and then the weighted feature vector representing it, which must be of a constant length equal to the sum of all tiles, and classifying the whole image with a fully connected classifier based on a single long vector that constitutes combined weighted vectors from the soft attention module.

However, the disadvantage of this known classification method and the multiclass classification system based on multiple instance learning is that to train the classification system a lot of computational power is still required. Additionally, as the result of the structure of the system, it analyses only histopathological images of a constant size, or a constant number of instances, which generates problems in the case of variable tissue sizes. In addition, the disclosed system continues to generate an unsatisfactory margin of classification error.

Therefore, the problem to be solved by the invention is to provide a method for training a system for multiclass classification of microscope images based on multiple instance learning, which would require less computational power and allow for a quicker generation of a trained system. Another scope of the invention is to provide a trained system for classifying high resolution microscope images which is more accurate and reliable.

Herein is disclosed the method of training a system for the classification of microscope images based on multiple instance learning, including

- the step of preprocessing the microscope image from the microscope image set, including the step of dividing the microscope image into a set of n patches, wherein each of the n patches forming the microscope image is assigned the same label assigned by the whole microscope image,

- the step of preparing the learning set of preprocessed microscope images, wherein the learning set including the training set and the test set, and the training set additionally including a validation data set,

characterised in that it comprises

- the step of training the image feature representation module including gradient training of the convolutional neural network on the training set of preprocessed microscope images using cross-validation,

- the step of extracting the patch feature vector from the trained image feature representation module for each of the n patches of each microscope image from the training set of preprocessed microscope images to obtain a training set of bags, each of which contains n patch feature vectors,

- the step of training the classification module on the training set of bags including n patch feature vectors using cross-validation, wherein the value of n may differ for each bag from the training set of bags, and wherein the classification module includes at least one feature vector aggregation module to obtain a single representation vector of microscope image features having the same size as the size of each of the vectors constituting the bag, and at least one classifier.

Preferably, the feature vector aggregation module is at least one of a module implementing the Fisher Vector algorithm, a GRU or Transformer or LSTM recurrent RNN, an aggregation module with the attention mechanism, and the classifier is at least one of a module implementing random forest algorithm or shallow neural network.

In another embodiment of the invention the system of training is a system for the multiclass classification of microscope images based on multiple instance learning, including

- a the microscope image preprocessing module from the microscope image set, comprising the microscope image dividing module into a set of n patches configured to divide the microscope image into a set of n patches and to assign the same label assigned by the whole microscope image to each of the n patches forming the microscope image,

- storage means containing the learning set of preprocessed microscope images, the learning set including the training set and the test set, and the training set additionally including a validation data set,

is characterised in that it contains

- an image feature representation module containing a convolutional neural network configured for gradient learning on the training set of preprocessed microscope images using cross-validation,

- a patch feature vector extraction module configured to extract the patch feature vector from the trained image feature representation module for each of the n patches of each microscope image from the training set of preprocessed microscope images to obtain a training set of bags, each of which contains n patch feature vectors,

- a classification module configured for separate training on the training set of bags including n patch feature vectors using cross-validation, wherein the value of n may differ for each bag from the training set of bags, the classification module includes at least one feature vector aggregation module to obtain a single representation vector of microscope image features having the same size as the size of each of the vectors constituting the bag, and at least one classifier.

In another embodiment of the invention a method for multiclass classification of microscope images, comprising

- the step of preprocessing the microscope image, including the step of dividing the microscope image into a set of n patches, wherein each of the n patches forming the microscope image is assigned the same label assigned by the whole microscope image, is characterised in that it comprises

- the step of delivering the pre-processed microscope image to the image feature representation module containing the trained convolutional neural network,

- the step of extracting the patch feature vector from the image feature representation module for each of the n patches of each microscope image to obtain a bag including n patch feature vectors,

- the step of delivering the bag including n patch feature vectors to the classification module, wherein the value of n may differ depending on the bag, the classification module includes at least one feature vector aggregation module to obtain a single representation vector of microscope image features having the same size as the size of each of the vectors constituting the bag, and at least one classifier.

In another embodiment of the invention a system for multiclass classification of microscope images, comprising

- the microscope image preprocessing module from the microscope image set, comprising the microscope image dividing module into a set of n patches configured to divide the microscope image into a set of n patches and to assign the same label assigned by the whole microscope image to each of the n patches forming the microscope image,
is characterised in that it contains

- an image feature representation module containing a trained convolutional neural network,

- a patch feature vector extraction module configured to extract the patch feature vector from the image feature representation module for each of the n patches of each microscope image from the training set of preprocessed microscope images to obtain a training set of bags, each of which contains n patch feature vectors,

- a classification module configured for the classification of the microscope image on the basis of a bag including n patch feature vectors, wherein the value of n may differ depending on the bag, the classification module includes at least one feature vector aggregation module to obtain a single representation vector of microscope image features having the same size as the size of each of the vectors constituting the bag, and at least one classifier.

The concept behind training the microscope picture classification system, which processes pictures divided into patches according to the invention, is to obtain information about the representation vectors of the features of these patches and aggregate this information for all patches in the image after dividing the image into patches so that the final classification is carried out on a vector of the same length as the individual patch feature vectors that constitute the image, containing as much information as possible about the image itself, with particular emphasis on the relationship between patches. In addition, a non-obvious element of the method and the system according to the invention is the separation of the training step of the image representation module from the training step of the classification module, which includes the module of aggregation of the feature representation vectors of individual patches. As a result, a trained classification system is achieved more quickly while using less computational power. Moreover, the system trained in this way is more accurate and reliable.

The invention non-obviously combines multiple instance learning with a poorly supervised approach in teaching image feature representation, which the trained system learns separately in the first training step, the patches being assigned the labels of the whole biopsy. This means that the labels are false as not every biopsy region manifests the pathological lesion associated with the assigned score. At the same time, the standard assumptions of multiple instance learning were modified, i.e. there is no assumption of a binary classification. In addition, it is assumed that each tile belongs to some hidden class describing the tiles, and it is assumed that the tiles may be dependent on one another or their combination affects the final label, and not that the label can be predicted on the basis of one tile showing pathomorphological lesions characteristic of a given class.

Thanks to assigning each patch a false label of the whole image, the detailed annotation of each patch is avoided, allowing the classification system to be trained efficiently on large sets that are additionally not well selected.

Thanks to the step of extracting the features vector of the patches that constitute the image for each individual patch, the information contained in each patch that is possibly most relevant to the final classification is obtained, as opposed to the alternative solution, namely the probability value of belonging to a given class calculated for each individual patch.

Thanks to the step of aggregating the features of the patch images, a one-dimensional feature vector for the whole image is obtained, which has the same length as the feature vector of the patches constituting the image, and contains aggregated information about the whole image, not just the selected patches. This allows for the classification of images with a variable number of patches, i.e. histopathological images of different sizes, and considering all information contained in the image.

Thanks to a separate training step of the image representation module, the learning trap is avoided, because in this situation there is no randomly initiated aggregation of the patch feature vectors at the same time. The aggregation of the patch feature vectors, which after training the system on the mismatched feature representation will affect the weights of the image feature representation module, which may result in learning instability or even incorrect learning of the whole system, is also avoided.

Thanks to the separate training of the image representation module, it is also possible to subsequently combine it with a classification module that contains an aggregation module or a classifier that are not differentiable and could not be used in the training of the whole system to optimise its parameters.

Moreover, thanks to the use of the attention mechanism in the classification module, the information about the dependencies between the tiles is aggregated and transferred to the classifier.

Numerous advantages also result from the presence of a module for obtaining information about the severity of patches from the classifier in order to visualise them. As a result, the medical staff making the diagnosis can quickly identify the places that are suspected of the presence of pathological lesions described by the value assigned by the algorithm.

Another advantage of the system trained according to the method of the invention is that it increases the accuracy of the classification of microscope images. The increase in accuracy is mainly achieved by aggregating the information from all patch vectors describing the biopsy so that information is not lost.

The method of training the microscope picture classification system, the training system for the microscope picture classification system and the method of microscope image classification using the trained microscope image classification system according to the invention are presented in details within the embodiments with reference to the attached drawings, in which:

Fig. 1 shows a general flowchart of a method of training a system for classifying microscope pictures according to the invention;

Fig. 2 shows a general flowchart of the microscope image classification method using the trained system according to the invention;

Fig. 3 shows the image preprocessing step and the training data preparation step;

Fig. 4a shows the step of training the image feature representation module separately;

Fig. 4b shows the step of extracting patch feature vectors;

Fig. 5a shows the step of training the classification module separately according to the first embodiment;

Fig. 5b shows the step of training the classification module separately according to the second embodiment;

Fig. 5c shows the step of training the classification module separately according to the third embodiment;

Fig. 6 shows a block diagram of a system for training a multiple instance classification system of microscope images based on multiple instance learning;

Fig. 7 shows a block diagram of a system for multiclass classification of microscope images based on multiple instance learning.

The terms used in the disclosure should be understood in the following way; "A patch" is a subregion of an image in the shape of a rectangle or square, which is obtained by dividing the whole image. A patch can be any size smaller than the size of the whole image. Moreover, the individual patches may be sub-images adjacent to each other or overlapping each other.

The term "microscope image" is understood as an image corresponding to one section/slice of a paraffin block. One biopsy section can sometimes contain more than one fragment of tissue. In the event that more than one section of the paraffin block is placed on a microscope slide, the slide is labelled appropriately and the "microscope images" as used herein are manually extracted before image analysis of the whole slide is started. Herein, this term is used interchangeably with the term "biopsy image"/"biopsy".

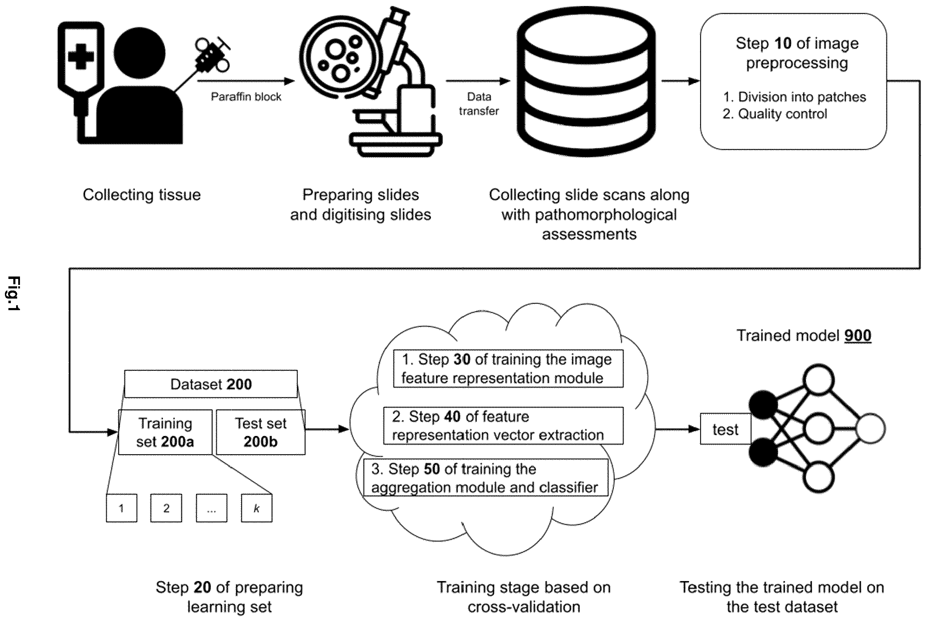

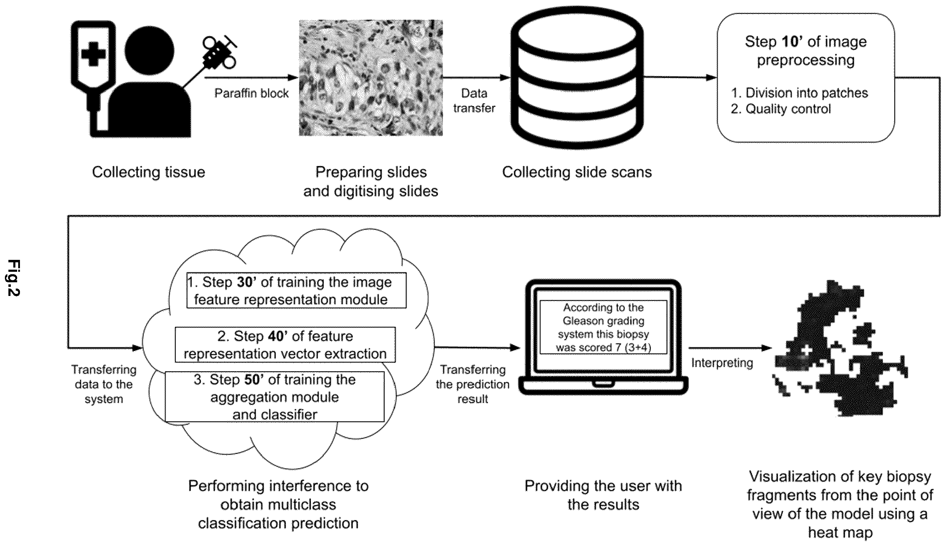

According to the first embodiment shown in Fig. 1 and Fig. 2, both the method of training the microscope picture classification system and the method of microscope picture classification are preceded by activities such as: collecting biological material, preparing biological material for evaluation under the microscope, scanning microscope slides, sending and collecting specimen scans, i.e. microscope images, in an appropriate repository.

As part of the above-mentioned activities, high-resolution scans of microscope slides are produced. The sizes of the resulting images can be as large as 120,000 x 800,000 pixels, typically 10,000 x 10,000 pixels. The images of histological specimens have special properties, resulting from the method of collecting biological material and preparing specimens. Usually, several slides are prepared from a single collection of biological material, and the final diagnosis is made on the basis of all slides. Hence, diagnosis requires tremendous amounts of information to be analysed.

Histological images are extremely difficult to analyse. Firstly, a scan of a single slide may contain not only one, but several fragments of tissue. Secondly, these images can be acquired using different magnification, for example: $0.25\mu$m/pixel, $0.5\mu$m/pixel. Thirdly, the colors between slides within even one biopsy may vary depending on the amount and type of the applied staining material. Fourthly, these images often contain fragments of ink left by marker pens used by a pathologist to describe the slide within the analysed tissue. These types of images lose their suitability for computer image analysis.

Therefore, according to the invention, both the method of training the microscope image classification system (as shown in Fig. 1) and the microscope image classification method according to the invention (as shown in Fig. 2) preferably comprise an image preprocessing step 10. One of the differences between each method of training the microscope image classification system and each method of microscope image classification is that in the case of the method of training the microscope image classification system, the collected microscope image scans contain additional information, the so-called label, describing the assessment performed by a pathologist according to an appropriate scale that is used to train (teach) the system. Scoring assigned to the images may include multistage scoring, e.g., the Gleason grading system, binary scoring, e.g., the M value in the pTNM staging system, or composite scoring in which not one but two labels are assigned, e.g., the pTNM staging system.

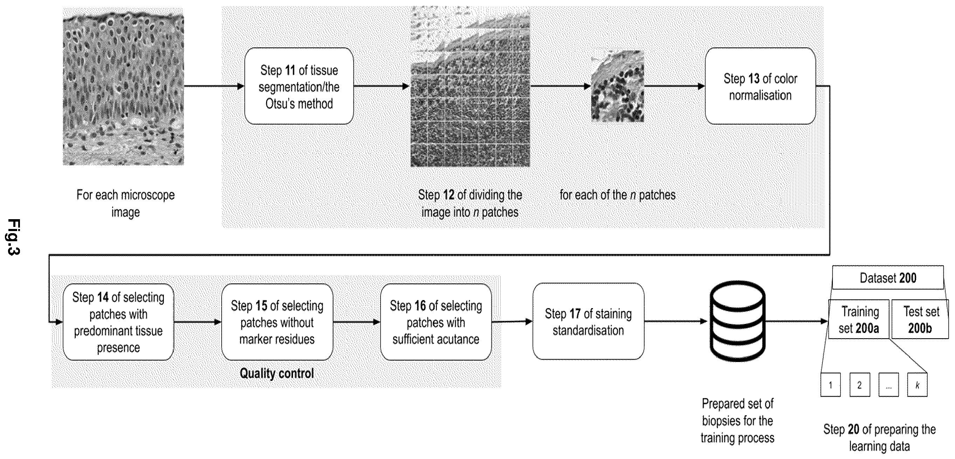

As shown in Fig. 1 and 2 and in detail in Fig. 3, the image preprocessing step 10, includes:

- step 11 of tissue segmentation to separate the tissue area from the background,

- step 12 of dividing the image into patches,

- step 13 of color normalisation,

- step 14 of selecting patches with predominant tissue presence,

- step 15 of selecting patches without marker residues,

- step 16 of selecting patches with sufficient acutance,

- step 17 of staining standardisation.

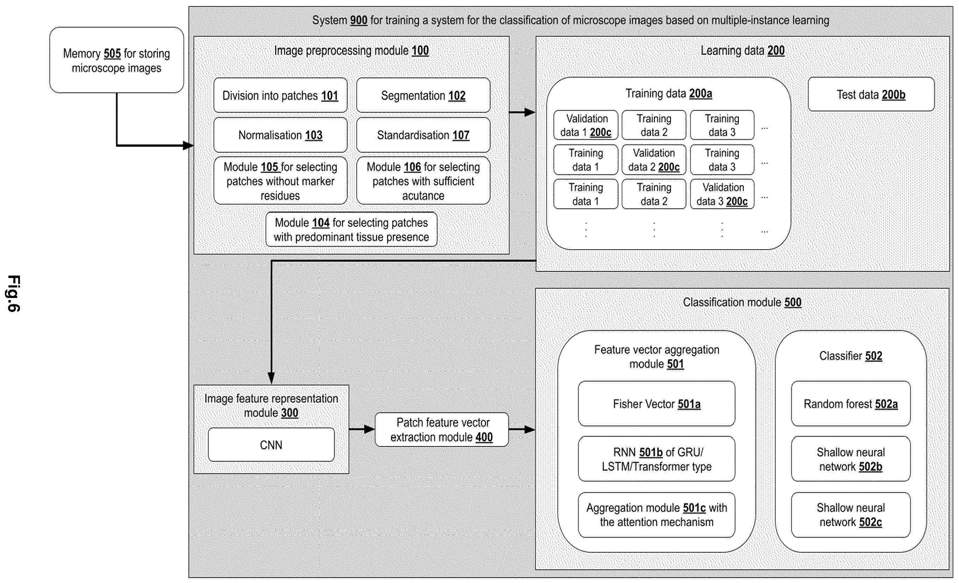

All steps are performed automatically by the respective submodules of the image preprocessing module 100 as shown in Fig. 6.

Step 11 of tissue segmentation is the separation of the tissue from the background in the thumbnail of the picture and is aimed at obtaining the region occupied by the tissue to subsequently cut out the patches. In step 11 of segmentation, the Otsu's method or, alternatively, thresholding is used. At the end of this step, an image with a binary map of the presence of tissue in the image is obtained. Thanks to step 11 of segmentation, it is possible to subsequently divide the image into patches representing only tissue.

Step 12 of dividing the image into patches consists in cutting out image fragments of a given size and is aimed at obtaining images that can be processed by a deep neural network in GPU (Graphical Processing Unit) memory. In step 12 of dividing the image into patches, the sliding window mechanism is used. This step is optimised during training. For this purpose, the validation set 200c of images is used in several training sessions (see Fig. 6), to select the optimal patch size and possibly the proportion with which the patches should overlap. At the end of step 12 of dividing the image into n patches, numerous sets of patches from numerous images are obtained, wherein these sets are separate for each biopsy and have a different size n. Thanks to step 12 of dividing the image into patches, it is possible to train the module 200 for generating image feature representations.

Step 13 of color normalisation step consists in bringing the pixel value distribution of the image to a normal distribution with a mean at 0 and a variation of 1, to prepare the image for further processing. In step 13 of normalisation, an algorithm which consists in subtracting the mean value of the pixels for each of the RGB channels from all pixels and dividing them by the same calculated standard deviation of the set of photos, is used. At the end of this step, an image whose average pixel value is 0, and the deviation of these values is 1, is obtained. Thanks to step 13 of color normalisation, it is possible to use pre-trained neural networks which are subsequently subjected to the fine-tuning process.

Step 14 of selecting patches with predominant tissue presence is an estimate of the percentage of the patch represented by the background and is aimed at identifying patches that do not represent sufficient tissue area for analysis. In step 14 of selecting patches with predominant tissue presence, a 5th percentile color thresholding algorithm is used. At the end of this step, an image that has enough information for diagnostic purposes mostly representing tissue is obtained. Thanks to step 14 of selecting patches with predominant tissue presence, overfitting of the model to background noise present during picture acquisition, such as shadows and reflections, is avoided.

Step 15 of selecting the patches without ink from marking pens is the analysis of the patch colors and is aimed at eliminating the patches soiled by ink. In step 15 of selecting the patches without ink from marking pens, an algorithm of comparing the mean value of the RGB image representation channels and checking if any of them predominates over the red color, is used. At the end of this step, an image that shows only the tissue is obtained. Thanks to step 15 of selecting patches without ink from marking pens, overfitting of the model to marker-induced stains is avoided.

Step 16 of selecting patches with sufficient acutance is performed to determine if the image is blurry and aimed at removing the blurry tissue fragments that have lost the information needed for diagnosis from the future data set. In step 16 of selecting the patches with sufficient acutance, a random forest algorithm based on patches represented by the histogram of oriented gradients or alternatively, thresholding based on the Laplace operator standard deviation value is applied. At the end of this step, only an image that is sharp and shows tissue is obtained. Due to step 16 of selecting patches with sufficient acutance, overfitting of the model to fragments of the tissue picture that do not carry diagnostic information is avoided.

Step 17 of staining standardisation is performed to standardise the staining of the tissue and is intended to remove batch effects. In the normalization step, the StainGAN or alternatively Vahadane algorithm is used. At the end of step 17 of staining standardisation, an image showing the tissues as if they were stained using the same staining method and with a similar proportion of the chemical reagents used for staining, is obtained. Thanks to the color normalization step, the model learned later will not overfit the sample effects caused by staining differences.

As mentioned above, the image preprocessing step 10 improves the quality of the analysed data. On the other hand, thanks to dividing the data for analysis into smaller fragments, both the selected sub-steps of preprocessing and further analysis of image data require hardware with less computational power. Said image preprocessing steps 11, 13, 14, 15, 16 are alternatives except for step 12 of dividing the image into patches.

Referring now to Fig. 1 and more specifically to Fig. 3, the method of training the image classification system further comprises the step 20 of preparing a learning set 200 of preprocessed microscope images including a training set 200a and a test set 200b, the training image set further comprising a set of images for cross-validation 200c. Specifically, the training set 200a is divided into k parts, 1/k-th part of which is the validation data set 200c. The division into k parts is done k times, so that during each division a different k-th part constitutes the validation data set 200c (as shown in detail also in Fig. 6).

In step 20 of preparing the learning set 200 of preprocessed microscope images containing the training image set 200a and the test image set 200b, the available data is divided into the corresponding image sets (previously divided into patches), wherein the patches belonging to the same images are placed in the same set, to avoid training errors. The percentage division of the available data set into individual sets is discretionary and selected individually for each trained system depending on the type of pictures to be classified. For example, the percentage division could be as follows: the training set - 80%, the test set - 20%, wherein 20% of the training set is the validation set.

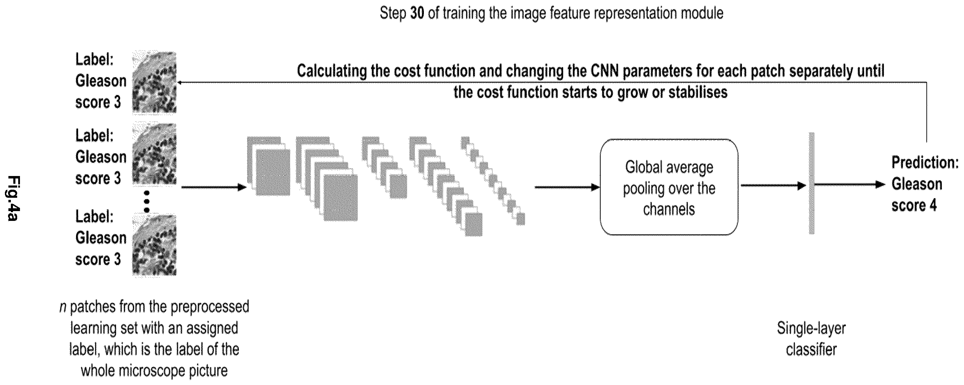

Then, the method of training the microscope picture classification system proceeds to step 30 of training the image feature representation module as shown in Fig. 4a. Step 30 of training the image feature representation module consists in providing the image feature representation module 300 with successive patches from the training set 200, wherein, as mentioned before, each patch of the n image patches is assigned a label that has been assigned to the whole image.

The fact that a patch is assigned the same label as the whole image, as opposed to the case in which the patches have their own label assigned, results in a significant reduction in the cost of obtaining such a label. In addition, it allows for a training model, wherein a single patch does not determine the label for the whole biopsy. Thanks to this approach, it is possible to teach to generate a vector representation that carries patch information without the necessity of an exact patch label. According to the document of Arpit, Devansh, et al. "A closer look at memorization in deep networks." International Conference on Machine Learning, PMLR, 2017, such an approach allows learning to generate a vector representation despite introducing some noise into the training set.

Step 30 of training the image feature representation module 300 consists in training the convolutional CNN in a supervised or poorly supervised manner. The method of training depends on the available data. Not every set of images has sufficiently detailed annotations of the picture to allow for fully supervised training, i.e. not in every set of biopsy images each pixel is assigned to a specific class (e.g. healthy or cancer cells). Advantageously, poorly-supervised training, or training using images that only carry information about the whole biopsy and not about its fragments, reduces the time and financial costs of obtaining the database. This results from the fact that detailed annotations are tedious, long and require the work of a very experienced specialist so that as few human errors as possible creep are present on the labels.

Preferably, the CNN in the method according to the invention can be trained by fine-tuning. The use of fine-tuned models allows for the use of previously trained CNNs in natural images. Then, it is necessary to train such a CNN on the histopathological data so as to obtain a domain adaptation of the model to make it operate on the histopathological data. Fine-tuning allows for a quicker development of such a model and often means its higher efficiency and accuracy of classification. In comparison to the application of pre-trained models, the fine-tuned model is better at finding problem-specific features rather than generic features.

At the output of the last network layer in each iteration, the cost function is computed. The CNN is trained in a regressive manner, i.e. using the mean squared error cost function, which is propagated backward to modify the network weights. Normally, a CNN is considered trained when the value of the cost function stops decreasing or starts increasing on the validation set 200c.

Depending on the anticipated classification task, i.e. depending on the type of score assigned to the analysed microscope images, the step 30 of training the image feature representation module may differ in the structure of the CNN and the sequence of operations. In particular, when a single patch has only one label assigned, the CNN is trained only for a given scale of the label. In another embodiment, when a single patch is assigned more labels (composite scoring), the CNN is trained for each defined combination of labels. The label combinations are selected based on the value of the correlation between the labels, i.e. when the correlation between the labels is above 0.85, they are trained together.

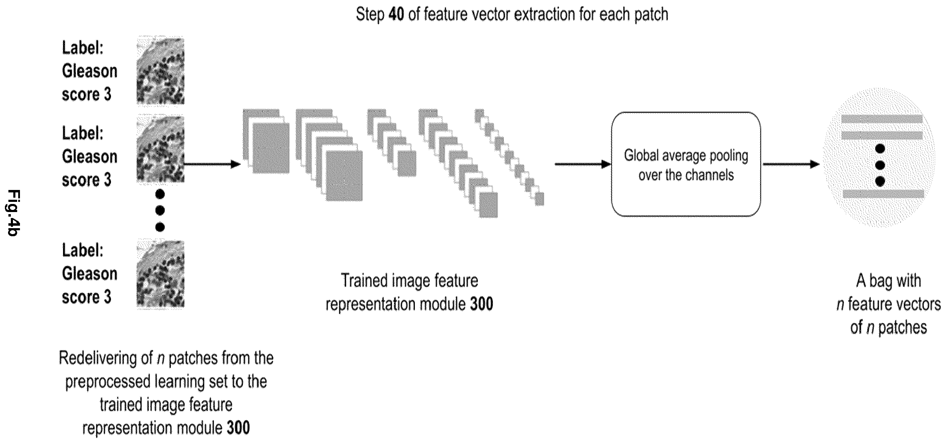

The CNN trained in this way is used not as a classifier, but as an image feature representation module 300, which means that step 30 of training the image feature representation module is followed by step 40 of feature vector extraction for each patch belonging to a given training image, skipping the calculation of the probability that the patch belongs to a given class. As shown in Fig. 4b, the set of learning pictures 200 is passed again through the trained picture feature representation module 300 to extract for each patch a vector representing its features from training set 200a. This vector is for example extracted from the last convolutional layer of the CNN, i.e. from the penultimate layer of the whole network in the case of the CNN of the ResNet family, as illustrated in Fig. 4b. In another embodiment, in the case of VGG network, extraction takes place from the fourth layer from the end. Extraction of a single feature vector from the last convolutional layer is performed using the size reduction operation, i.e. global average pooling over the channels. This operation is performed by the feature vector extraction module 400 as shown in Fig. 6. Consequently, for each whole training picture $x_j$, containing $p$ patches, for each $p_i$ patch $f_i$ vector is generated, wherein $f_i \in \mathbb{R}^{512}$. Therefore, a given biopsy (microscope image) is described in this step by a sequence of vectors $f^{(j)}$ called "a bag":

$$\mathbf{f}^{(j)} = [f_1^{(j)}, \ldots, f_{N_j}^{(j)}]$$

wherein each biopsy may have a different size and consequently the number j of vectors in the bag which describes it may be different.

The advantage of the data in this form, which is delivered to the subsequent completely independent step, is that it already carries information about the corresponding CNN weights, which will not change, and which is optimal for the correct representation of the information within the patch. As a result, the whole system is much better trained concerning the elements located within a single patch. This has the effect of increasing the accuracy of the final classification and stabilising the training, because there is no problem with the simultaneous training of the aggregating and the representation generating module, where the representation generating module may be burdened with the unfortunate initialisation of the aggregation module weights.

Subsequently, the method of training the microscope image classification system proceeds to step 50 of training the classification module 500, the classification module 500 comprising the feature vector aggregation module 501 and the classifier 502. The term "feature vector aggregation module" should be understood as any software-implemented function that performs vector addition to obtain one vector representing the whole microscope image of the same length as the length of a single feature vector of the patch belonging to that image.

Thanks to the use of a separately trained classification module 500 in the trained multiclass classification system 900, it is possible to attempt to assemble it from any algorithms known to a person skilled in the art to be applied for this purpose, thus improving the accuracy of the classification made by the whole system 900. In particular, a feature vector aggregation module 501 and/or a classifier 502 that could not be trained in a regressive manner together with the image feature representation module 300 may be used. In particular, classifiers 502 of this type include non-differentiable classifiers, e.g., a random forest classifier.

Thanks to the application of the feature vector aggregation module 501 for single patches in the classification module 500, more information can be provided to the classifier. For example, if the label value of the whole microscope image depends on lesions present in several patches, the feature vector aggregation module 501 will consider these patches significant and the final vector representing the biopsy will contain this information within itself. On the other hand, the aggregation of predictions for individual patches, also known in the prior art, would not consider this relationship, which could lead to assigning an incorrect final label, because prediction does not carry information about what is in the picture (i.e. prediction informs about one feature). In contrast, a single patch feature representation vector carries information about the image content. For example, if a feature vector has a length of 256, it can encode information about 256 features.

In step 50 of training the classification module, in particular in sub-step 50 a of feature vector aggregation, successive bags of feature vectors obtained based on the training set 200 are delivered to the input of the feature vector aggregation module 501. Regardless of the type of the used aggregation module 501 and the type of classifier 502, in step 50 of training the classification module, cross-validation is applied.

As mentioned before, for pre-training the CNN, which is a separate image feature representation module 400 according to the invention, the basic learning set 200 is used, which after being processed by this trained image feature representation module 300 is used to train the rest of the system 900. Therefore, step 50 of training the classification module 500 uses the same training data 200a as the image feature representation generating module 300, wherein thanks to the cross-validated training scheme in each training iteration, the training set 200a contains slightly different data. Due to that, the test set 200b is not used in the model training process. Consequently, the reported training results are reliable.

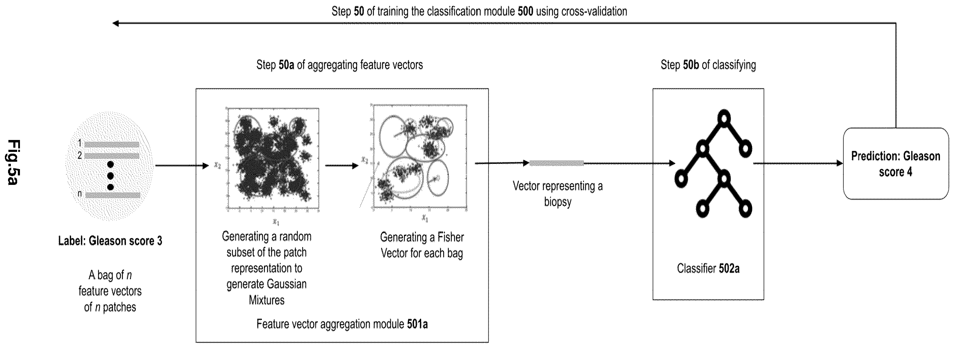

As shown in detail in Fig. 5a, step 50 of training the classification module may, in the first embodiment, be based on training the classification module 500 including the aggregation module 501 which is the aggregation module 501a implementing the Fisher Vector algorithm, and the classifier 502 which is the module 502a implementing a random forest algorithm. This embodiment is based on the fact that the Fisher vector describes how to alter a Gaussian mixture model (GMM) to fit the sequence of the $f_i$ feature vectors for the discussed image $x_j$. Let the GMM be represented by $\lambda = \{\mu_i, \sigma_i, i = 1,...,K\}$ and let the GMM value $p(f_i|\lambda)$ correspond to each i-th patch. Then the Fisher vector for the dimension d is defined as:

$$FV_d = \left[ \frac{\partial L}{\partial \mu_1^d}, \cdots, \frac{\partial L}{\partial \mu_K^d}, \frac{\partial L}{\partial \sigma_1^d}, \cdots, \frac{\partial L}{\partial \sigma_K^d} \right]$$

$$L = \sum_{f_i \in \mathbf{f}} \log p(f_i|\lambda)$$

In order to obtain a representation of the whole $x_j$ image, the Fisher vector is computed for each d dimension, and subsequently the obtained vectors are combined and normalised to obtain one Fisher Vector representing the whole microscope image. The resulting vector is then transferred to the input of the classifier 502a, i.e. a random forest algorithm, or alternatively shallow neural network (not shown), or alternatively support-vector machine, SVM, (not shown) to determine belonging to the appropriate class. In particular, at the output of the random forest classifier 502a, probabilities of belonging to particular classes are obtained, with the highest probability value indicating the predicted class.

Step 50 of training the classification module according to the first embodiment is based on selecting model hyperparameters using cross-validation, namely in one embodiment, it is based on repeating the learning process five times on 80% of the samples from the training set 200a in such a way that the remaining 20% of the training set 200a was separated in each of the 5 training sessions and constituted the validation set 200c. Fewer and more iterations of repeated learning are possible, depending on the available data and their characteristics, e.g. data obtained from 3 sources (medical centres) can be divided in such a way that training with the use of cross-validation is always performed on a different combination of data from 2 out of 3 centres, and is tested on data from the third source, which in a given training session does not constitute a training set. In this case, training with the use of cross-validation will be performed 3 times. The model with the parameters of the highest averaged accuracy is considered to be optimal.

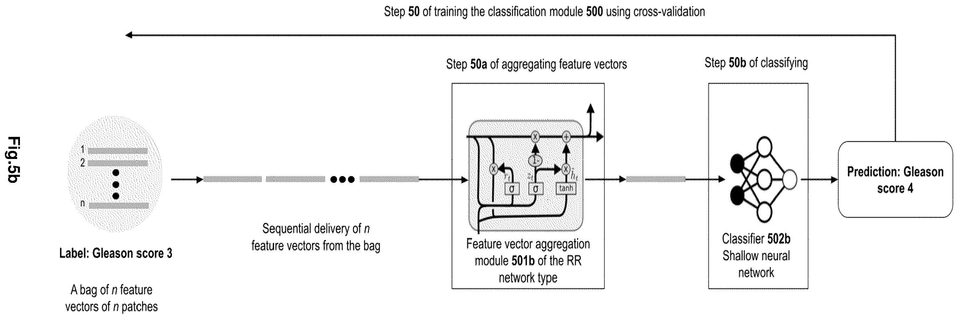

As shown in detail in Fig. 5b, step 50 of training the classification module, may in the second embodiment consist of training the classification module 500 comprising the aggregation module 501, which is a recursive neural network, RNN, 501b, in particular of the GRU/Transformer/LSTM type, and the classifier 502, which is a shallow neural network 502b. For example, when the recursive neural network, RNN, is a GRU network, in step 50 of training the classification module 500, the previously acquired bag of feature vectors is provided to the GRU network input sequentially, i.e. vector by vector. The GRU 501b network is defined as

$$z_t = \sigma(W_z f_t + U_z h_{t-1} + b_z),$$

$$r_t = \sigma(W_r f_t + U_r h_{t-1} + b_r),$$

$$h_t = z_t \odot h_{t-1} + (1 - z_t) \odot \phi(W_h f_t + U_h(r_t \odot h_{t-1}) + b_h),$$

where $z_t$ is the update gate vector, $r_t$ is the resettable gate vector, $h_t$ is the output vector, and $W$, $U$, and $\sigma$ are trainable parameters. The operator $\odot$ denotes multiplication according to the order of the elements, while $\sigma$ and $\phi$ are sigmoid and tanh activation functions, respectively.

The feature vectors are processed one by one, starting with t = 1. At the beginning $h_1 = [0, \ldots, 0] \in \mathbb{R}^H$ where H is the number of output dimensions. The last output vector $h_N$ is taken, it is transformed by means of linear transformation and the softmax function is used which produces the predictive vectors $\{\hat{y}_i^{(j)} \in \mathbb{R}^{C_i} : i \in \{1, 2, \ldots, S\}\}$ containing a probability score for the j-th biopsy. The number of possible classes for the i-th result is defined as $C_i$. The predicted results are those with the highest respective probability.

The RNN 501b is trained using a weighted cross-entropy loss function defined as:

$$\text{WCE} = -\frac{1}{SC} \sum_{i=1}^{S} \sum_{c=1}^{C} w_{i,c} y_{i,c}^{(j)} \log \hat{y}_{i,c}^{(j)},$$

where $y_{i,c}^{(j)}$ is 1, if the true label for the i-th result and the j-th biopsy is c, and 0 otherwise. Similarly, $\hat{y}_{i,c}^{(j)}$ is the predicted probability of class c for i-th result and j-th biopsy.

It should be noted that the WCE can be used in the case of patches that have multiple labels assigned simultaneously (i.e. in the case of pictures graded according to medical scores with composite label values). Hyperparameters of the RNN 501b are obtained using cross-validation, in particular parameters such as the optimiser or the number of layers of the RNN 501b. Preferably, in the second embodiment, an additional self-attention module (not shown), i.e. an additional network layer called an embedding layer, may be used upstream of the actual RNN 501b, which usually improves the representation of the patches (depending on the analysed set of image data). As the embedding layer, a self-attention mechanism $\alpha : \mathbb{R}^{512} \to \mathbb{R}^{512}$ is applied, that uses information from other patches (i.e. their feature vectors) to enrich the input representation for the classifier 502b. The vector of the biopsy (microscope image) representation is defined as $\vec{x} = \{\vec{h_i}\}_{i=1}^{N}, \vec{h_i} \in \mathbb{R}^{L \times 1},$ where $h_i$ is a representation of a single patch, and the operator output is defined as:

$$\alpha(\mathbf{f}) = \mathrm{softmax}\left(\frac{(\mathbf{f}W_Q)(\mathbf{f}W_K)^T}{\sqrt{d}}\right)(\mathbf{f}W_V),$$

where the matrices $W_Q$, $W_K$, $W_V$ are trainable parameters and d is the $W_K$ dimension.

When a self-attention module is included in the classification module 500, $\alpha(\mathbf{f})$ is provided to the RNN 501b instead of the original feature vector **f**. It is decided based on cross-validation whether it is justified to use the self-attention module.

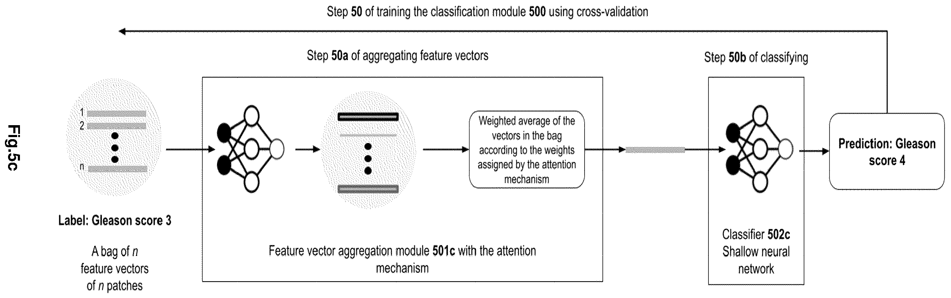

As shown in detail in Fig. 5c, step 50 of training the classification module 500, may in the third embodiment consist of training the classification module 500 comprising the aggregation module 501, which is the aggregation module 501c with the attention mechanism, and the classifier 502, which is the shallow neural network 502c. The feature vector aggregation module 501c with the attention mechanism according to the invention comprises a neural attention network, namely a network that consists of two dense layers w and V, between which a hyperbolic tangent operation is performed. In particular, the applied attention mechanism may be the so-called the attention pooling mechanism, which allows for the assignment of severity to each patch in the form of exactly one number.

The output operator of the attention network being the module for calculating the weighted average for all vectors in the input bag to obtain a single vector representing the whole microscope image, is defined as:

$$\mathbf{z} = \sum_{i=1}^{N} a_i f_i, \ \text{where} \ a_i = \frac{\exp\left(\mathbf{w}^T tanh(\mathbf{V} f_i)\right)}{\sum_j^N \exp\left(\mathbf{w}^T tanh(\mathbf{V} f_j)\right)}$$

where $\mathbf{w} \in \mathbb{R}^{M \times 1}$ and $\mathbf{V} \in \mathbb{R}^{M \times L}$ are the layers of the trained attention network. Furthermore, the weights $a_i$ add up to 1 so that they remain the same regardless of the number of patches. The attention mechanism is trained separately for each type of single label assigned to the patch (for each possible label from the medical score). In the attention network with the attention pooling mechanism and in the further classifier 502c, a dropout layer and a normalisation layer are used for the so-called regularisation, thanks to which overfitting to training data can be avoided. In addition, the patches are encoded as part of attention-based embedding, i.e. the self-attention mechanism described above. The use of the self-attention mechanism allows for the detection of dependencies between instances (patches) in the bag. The use of soft attention is impossible here because it requires a constant spatial size of the feature map. However, the number of patches (instances) in the bag depends on the size of the analysed biopsy, which means that in the system according to the invention, the spatial dimensions of the processed data cannot be kept constant. As a result, the training method and the trained system according to the invention are more flexible and easier to use.

The feature representation vector of the whole image obtained at the output of the feature vector aggregation module 501c with the attention mechanism is further provided to the shallow neural network 502c to calculate the probability of belonging to a given class in order to determine the final label of the whole microscope picture from the training set 200. The classification module 500 in the third embodiment learns by computing a cost function and back propagation, which allows the parameters of the aggregation module 501c with the attention module and the shallow classification network 502c to be optimised. The model training process and the selection of hyperparameters is performed using cross-validation.

The selection of the best of the three available embodiments of the classification modules 500 according to the invention is made on the basis of the results of the tests performed on the test set 200, after optimising each of the individual types of classification modules 500. Namely, thanks to the initial application of the cross-validated training mode, the optimal hyperparameters for each of the three types of classifiers 501a, 501b, 501c are obtained separately. Furthermore, the whole training set 200a is used to train each of the optimised types of classification module 500, and the classification module 500 with the best score on the test set 200c is considered the most suitable for classifying microscope images for the case for which the model 900 is trained. As a result, the training method according to the invention is very flexible, and the trained system 900' can be adapted to the needs of the customer.

As mentioned, the method of training the system 900' for classification of microscope images ends with step 60 of testing the system 900 on a previously prepared test set 200c of images. It is based on performing a test method of automatic classification of microscope images according to the invention as described below.

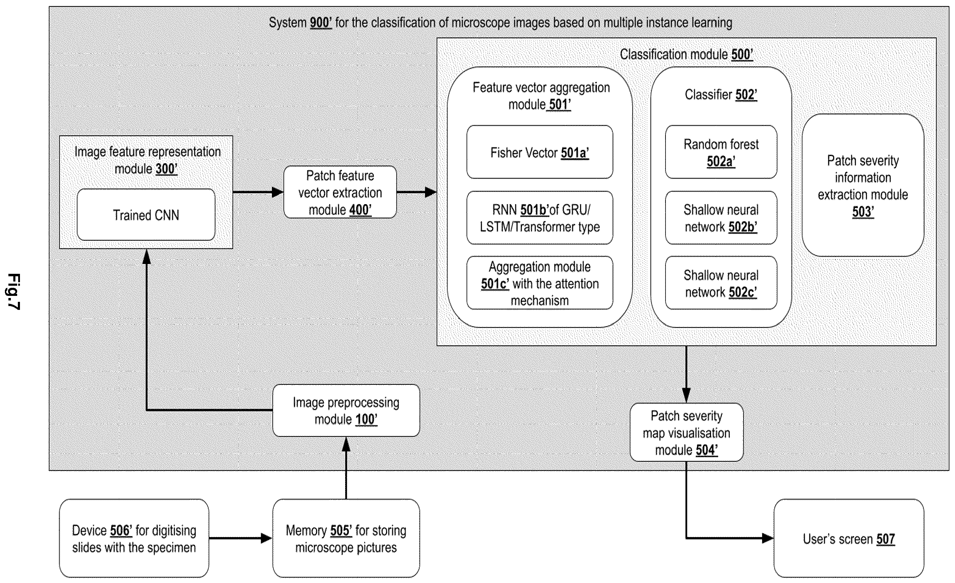

The method of automatic classification of microscope images according to the invention is the target process that is performed for diagnostic purposes and is used by the end user, e.g. a medical laboratory. The method of automatic classification of microscope pictures according to the invention is preceded by the step of generating a microscope photo and providing it to the trained system 900' for automatic microscope picture classification, e.g. from the microscope 506' (as shown in Fig. 7). The method of automatic classification of microscope pictures according to the invention comprises:

- step 10' of preprocessing the microscope image, including at least the division of the microscope image into n patches,

- step 40' of determining a feature vector for each of n patches by the separately trained image representation module 101' included in the image preprocessing module 100' in the trained automatic classification system 900'.

Then, the method of automatic classification of microscope pictures according to the invention comprises the classification step 50' which consists of:

- step 50a' of aggregating n patch feature vectors into the form of a single feature representation vector of the whole image with a length corresponding to the length of a single patch feature vector by a separately trained classification module 500' contained in the trained automatic classification system 900', and more precisely by the feature vector aggregation module 501' contained in the classification module 500'.

- step 50b' of classifying the microscope image on the basis of the feature representation vector of the whole image by the separately trained classification module 500' contained in the trained automatic classification system 900', and more precisely by the classifier 502 contained in the classification module 500'.

Preferably, the method for automatically classifying microscope pictures further comprises step 70' of obtaining patch severity information. It consists in obtaining information representing the severity of each patch in the final classification of the whole image from the information about image data processed at the classification step 50.

In the case of classification according to the first embodiment, the patch severity information is obtained from the Fisher Vector type feature vector aggregation module 501a in the form of a heatmap using the classifier result change gradient analysis.

In the case of classification according to the second embodiment, the information about the severity of a given patch is obtained from the GRU/LSTM type feature vector aggregation module 501b in the form of a binarized map based on the activation of memory gates of these networks - if the model memorises a patch, it means that this patch is significant.

In the case of classification according to the third embodiment, the information about the severity of a given patch is obtained from the aggregation module 501c with the attention mechanism in the form of the attention map, the values of which are single numbers assigned to each patch by the attention network.

The information acquired in this additional step enables the visualisation of the severity of individual patches in step 80' of patch severity visualisation, which can be used by medical personnel to focus on the places indicated by the algorithm and to reduce the time necessary to make a diagnosis.

The system 900 for training a system for multiclass classification of microscope pictures based on multiple instance learning is schematically shown in Fig. 6. The term "the system for training a system for multiclass classification" can be replaced with the term "the system for training a model for multiclass classification". In one embodiment, the system 900 of the present invention is implemented on a processor in any computing system of a server or PC type. System 900 for training a system for multiclass classification of microscope images based on multiple instance learning includes the module 100 for preprocessing a microscope image from the microscope image set. The basic module comprised in the image preprocessing module 100 is the module 101 for image division into patches, configured to divide the microscope image into a set of n patches and to assign the same label assigned by the whole microscope image to each of the n patches forming the microscope image. Preferably, the image preprocessing module 100 may further comprise: the tissue segmentation module 102 for separating the tissue area from the background, the color normalisation module 103, the module 104 for selecting patches with predominant tissue presence, the module 105 for selecting patches without marker residues, the module 106 for selecting patches with sufficient acutance, the staining standardisation module 107. Further, the system 900 includes a storage means including the learning set 200 of preprocessed microscope images, the learning set 200 comprising the training set 200a and the test set 200b, and the training set 200a further comprises the validation set 200c. The validation set 200c is the k-th part of the training set 200a divided into k-parts, the validation set 200c being a different k-th part of the training set 200a during each training session. The system 900 further includes the image feature representation module 300 comprising a convolutional neural network configured for gradient learning on the training set 200a of preprocessed microscope images using cross-validation and validation set 200c. The system 900 further includes the patch feature vector extraction module 400 configured to extract the patch feature vector from the trained image feature representation module 300 for each of the n patches of each microscope image from the training set of preprocessed microscope images to obtain a training set of bags, each of which contains n patch feature vectors. The system 900 further includes the classification module 500 configured for a separate training of bags consisted of n patch feature vectors on a training set using cross-validation and the validation set of bags consisted of n patch feature vectors, wherein the value of n may differ for each bag from the training set of bags and the validation set of bags. As shown in Fig. 6, the classification module 500 includes at least one feature vector aggregation module 501a, 501b, 501c to obtain a single microscope image feature representation vector having the same size as the size of each of the vectors constituting the bag, and at least one classifier 502a, 502b, 502c.

In one embodiment, the feature vector aggregation module 501b is a module implementing the Fisher Vector algorithm, and the classifier 502b is a module implementing a random forest algorithm. In one embodiment, the feature vector aggregation module 501b is a recursive neural network, RNN network of the GRU or Transformer or LSTM type, and the classifier 502b is a shallow neural network.

In another embodiment, the feature vector aggregation module 501 is the aggregation module 501c with the attention mechanism and the classifier 502c is a shallow neural network.

In another embodiment, the invention is a computer program product containing computer readable instructions for causing a processor to execute a method of training the automatic microscope image classification system of the invention.

The trained system 900' for automatic classification of microscope images is shown schematically in Fig. 7. The term "the system for multiclass classification" can be replaced with the term "the model for multiclass classification". In one embodiment, it is implemented on a processor in any computing system of a server or PC type. The trained system 900' for automatic classification of microscope pictures according to the invention includes the image preprocessing module 100', the image feature representation module 300', the patch feature vector extraction module 400' and the classification module 500'. The image preprocessing module 100' is shown simplified and may include exactly the same blocks as the image preprocessing module 100 shown in Fig. 6. However, as indicated previously, the image preprocessing module 100' must include at least the module 101' for dividing the module into n patches. The image representation module 300' includes a trained CNN. The classification module 500' includes at least one feature vector aggregation module 501a', 501b', 501c', and at least one trained classifier 502a', 502b', 502c'. Preferably, the classification module 500 additionally comprises the patch severity information extraction module 503' and the patch severity map visualisation module 504'. Preferably, the computing system may include a memory 505' for storing microscope pictures to be classified. In another embodiment, memory 505 may be external in relation to the computing system. Preferably, the system 900' for automatic classification of microscope pictures according to the invention may include means 506' for generating microscope photos, for example the microscope 506'. The means 506' for generating microscope pictures is in other words a device for digitising slides with the specimen.

In another embodiment, the invention is a computer program product containing computer readable instructions for causing a processor to execute a method of automatic classification of microscope pictures of the invention.

PRACTICAL EXAMPLE OF THE EMBODIMENT

Since no publicly available repository of microscope images assigned a multi-grade label is currently unknown, and the Applicant cannot present real examples of embodiments on private collections of microscope images with a multi-grade label available to them, for the purpose of demonstrating the technical effects of the invention, tests using publicly available images with the assigned two-grade label were additionally performed, the two-stage label being included in the set of multi-grade labels.

The acquisition rate of a trained system as well as its accuracy was tested using the generally available Camelyon16 image data set, also applied by B. E. Bejnordi, M. Veta, P. J. Van Diest, B. Van Ginneken, N. Karssemeijer, G. Litjens, J. A. Van Der Laak, M. Hermsen, Q. F. Manson, M. Balkenhol, et al., "Diagnostic assessment of deep learning algorithms for detection of lymph node metastases in women with breast cancer," Jama, vol. 318, no. 22, pp. 2199-2210, 2017. This set included 400 complete images of sentinel lymph node biopsy slides. The goal was to perform a binary classification, namely to determine whether the image shows metastasis of cancer or not. The above-described methods and the trained system of the invention were tested, and a five-fold cross-validation was used to train the system. As a result, the best trained system achieved 0.978 AUC (the preferable AUC is above 0.9) as shown in Table No. 1. The values of AUC higher than in the system trained according to the invention were obtained only in the case of combination of the results from several systems known in the prior art, wherein the combination should also be understood to mean a model trained in the same manner but with different initial weight initialisation.

Table 1

| Model type | AUC |
|---|---|
| ResNet18 + Attention Pooling (according to the invention) | 0.959 |

(continued)

| Model type | AUC |
|---|---|
| ResNet1 8 + RNN (according to the invention) | 0.978 |
| Ensemble of methods based on https://ieeexplore.ieee.org/abstract/document/7447814 | 0.994 |
| ResNet101 z atrous spatial pyramid pooling (trained fully-supervised method) | 0.976 |
| VGG-16 trained based on centroids | 0.9415 |
| GoogLeNet + geometric features + random forest | 0.9234 |
| Ensemble of two ResNet34 results from https://camelyon16.grand-challenge.org/results | 0.9156 |

**Claims**

**1.** Method of training a system for classification of microscope images based on multiple instance learning, comprising

- a step (10) of preprocessing the microscope image from the microscope image set, including a step (12) of dividing the microscope image into a set of n patches, wherein each of the n patches forming the microscope image is assigned the same label assigned by the whole microscope image,
- a step (20) of preparing a learning set of preprocessed microscope images, wherein the learning set including a training set (200a) and a test set (200b), and the training set (200a) additionally including a validation data set (200c), **characterised in that** it comprises
- a step (30) of training the image feature representation module comprising gradient training of the convolutional neural network on the training set of preprocessed microscope images using cross-validation,
- a step (40) of extracting the patch feature vector from the trained image feature representation module (300) for each of the n patches of each microscope image from the training set of preprocessed microscope images to obtain a training set of bags, each of which contains n patch feature vectors,
- a step (50) of training the classification module on the training set of bags including n patch feature vectors using cross-validation, wherein the value of n may differ for each bag from the training set of bags, and the classification module (500) comprises at least one feature vector aggregation module (501a, 501b, 501c) to obtain a single representation vector of microscope image features having the same size as the size of each of the vectors constituting the bag, and at least one classifier(502a, 502b, 502c).

**2.** Method according to claim 1, **characterised in that** the feature vector aggregation module (501a, 501b, 501c) is at least one of a module implementing the Fisher Vector algorithm, a GRU or Transformer or LSTM recurrent network RNN, an aggregation module with the attention mechanism, and the classifier (502a, 502b, 502c) is at least one of a module implementing random forest algorithm or shallow neural network.

**3.** Method according to claim 1 or claim 2, **characterised in that** the image preprocessing step (10) further comprises at least one of:

- step (12) of tissue segmentation to separate the tissue area from the background,
- step (13) of color normalisation,
- step (14) of selecting patches with predominant tissue presence,
- step (15) of selecting patches without marker residues,
- step (16) of selecting patches with sufficient acutance,
- step (17) of staining standardisation.

**4.** System of training a system for the classification of microscope images based on multiple instance learning, including

- a module (100) for preprocessing the microscope image from the microscope image set, including a module (101) of dividing the image into n patches configured to divide the microscope image into a set of n patches and to assign the same label assigned by the whole microscope image to each of the n patches forming the microscope image,
- storage means including a learning set (200) of preprocessed microscope images, wherein the learning set including a training set (200a) and a test set (200b), and the training set (200a) additionally including a validation data set (200c),

**characterised in that** it includes

- an image feature representation module (300) including a convolutional neural network configured for gradient learning on the training set of preprocessed microscope images using cross-validation,
- a patch feature vector extraction module (400) configured to extract the patch feature vector from the trained image feature representation module (400) for each of the n patches of each microscope image from the training set of preprocessed microscope images to obtain a training set of bags, each of which contains n patch feature vectors,
- the classification module (500) configured for a separate training on the training set of bags including n patch feature vectors using cross-validation, wherein the value of n may differ for each bag from the training set of bags, and the classification module (500) includes at least one feature vector aggregation module (501a, 501b, 501c) to obtain a single representation vector of microscope image features having the same size as the size of each of the vectors constituting the bag, and at least one classifier (502a, 502b, 502c).

5. System according to claim 4, **characterised in that** the feature vector aggregation module (501a, 501b, 501c) is at least one of a module implementing the Fisher Vector algorithm, a GRU or Transformer or LSTM recurrent network RNN, an aggregation module with the attention mechanism, and the classifier (502a, 502b, 502c) is at least one of a module implementing random forest algorithm or shallow neural network.

6. Method of classifying microscope images, comprising

- a step (10') of preprocessing the microscope image, including a step (12') of dividing the microscope image into a set of n patches, wherein each of the n patches forming the microscope image is assigned the same label assigned by the whole microscope image,
**characterised in that** it comprises
- a step (30') of delivering the pre-processed microscope image to an image feature representation module (300') including the trained convolutional neural network,
- a step (40') of extracting the patch feature vector from the image feature representation module (300') for each of the n patches of each microscope image to obtain a bag including n patch feature vectors,
- a step (50') of delivering the bag including n patch feature vectors to the classification module (500'), wherein the value of n may differ depending on the bag, and the classification module (500') includes at least one feature vector aggregation module (501a', 501b', 501c') to obtain a single representation vector of microscope image features having the same size as the size of each of the vectors constituting the bag, and at least one classifier (502a', 502b', 502c').

7. Method according to claim 6, **characterised in that** the feature vector aggregation module (501a, 501b, 501c) is at least one of a module implementing the Fisher Vector algorithm, a GRU or Transformer or LSTM recurrent network RNN, an aggregation module with the attention mechanism, and the classifier (502a, 502b, 502c) is at least one of a module implementing random forest algorithm or shallow neural network.

8. Method according to claim 6 or claim 7, **characterised in that** the image preprocessing step (10') further comprises at least one of:

- step (12') of tissue segmentation to separate the tissue area from the background,
- step (13') of color normalisation,
- step (14') of selecting patches with predominant tissue presence,
- step (15') of selecting patches without marker residues,
- step (16') of selecting patches with sufficient acutance,
- step (17') of staining standardisation.

9. System of classifying microscope images, including

- a module (100') for preprocessing the microscope image from the microscope image set, including a module (101') of dividing the microscope image into n patches configured to divide the microscope image into a set of n patches and to assign the same label assigned by the whole microscope image to each of the n patches forming the microscope image,

**characterised in that** it includes

- an image feature representation module (300') including a trained convolutional neural network,
- a patch feature vector extraction module (400') configured to extract the patch feature vector from the image feature representation module (400) for each of the n patches of each microscope image from the training set of preprocessed microscope images to obtain a training set of bags, each of which contains n patch feature vectors,
- a classification module (500') configured for the classification of the microscope image on the basis of the bag including n patch feature vectors, wherein the value of n may differ depending on the bag, and the classification module (500') includes at least one feature vector aggregation module (501a', 501b', 501c') to obtain a single representation vector of microscope image features having the same size as the size of each of the vectors constituting the bag, and at least one classifier (502a', 502b', 502c').

10. System according to claim 9, **characterised in that** the feature vector aggregation module (501a, 501b, 501c) is at least one of a module implementing the Fisher Vector algorithm, a GRU or Transformer or LSTM recurrent network RNN, an aggregation module with the attention mechanism, and the classifier (502a, 502b, 502c) is at least one of a module implementing random forest algorithm or shallow neural network.

11. System according to claim 9, **characterised in that** the classification module (500') further includes the patch severity information extraction module (503') and the patch severity map visualisation module (504').

12. System according to claim 9, **characterised in that** the image preprocessing module (100') further includes at least one of:

- module (102') of tissue segmentation to separate the tissue area from the background,
- module (103') of color normalisation,
- module (104') of selecting patches with predominant tissue presence,
- module (105') of selecting patches without marker residues,
- module (106') of selecting patches with sufficient acutance,
- module (1077) of staining standardisation.

13. Computer program product comprising computer readable instructions for causing a processor to execute a method of training the microscope image classification system based on multiple instance learning according to any of the claims 1 to 3.

14. Computer program product comprising computer readable instructions for causing a processor to execute a method for classifying the microscope image according to any of the claims 6 to 8.

**Collecting tissue** — Paraffin block → **Preparing slides and digitising slides** — Data transfer → **Collecting slide scans along with pathomorphological assessments** → **Step 10 of image preprocessing** 1. Division into patches 2. Quality control

**Step 20 of preparing learning set**

Dataset **200**

Training set **200a** | Test set **200b**

1 | 2 | ... | k

**Training stage based on cross-validation**

1. Step **30** of training the image feature representation module
2. Step **40** of feature representation vector extraction
3. Step **50** of training the aggregation module and classifier

Trained model **900**

test

**Testing the trained model on the test dataset**

Fig.1

**Fig.2**

Collecting tissue → Paraffin block → Preparing slides and digitising slides → Data transfer → Collecting slide scans →

Step **10'** of image preprocessing

1. Division into patches
2. Quality control

Transferring data to the system →

Performing interference to obtain multiclass classification prediction

1. Step **30'** of training the image feature representation module
2. Step **40'** of feature representation vector extraction
3. Step **50'** of training the aggregation module and classifier

Transferring the prediction result →

According to the Gleason grading system this biopsy was scored 7 (3+4)

Providing the user with the results

Interpreting →

Visualization of key biopsy fragments from the point of view of the model using a heat map

Dataset **200**

Test set **200b**

Training set **200a**

| 1 | 2 | ... | k |

Step **20** of preparing the learning data

Step **13** of color normalisation

Step **11** of tissue segmentation/the Otsu's method

Step **12** of dividing the image into *n* patches

for each of the *n* patches

For each microscope image

Step **17** of staining standardisation

Step **16** of selecting patches with sufficient acutance

Step **15** of selecting patches without marker residues

Step **14** of selecting patches with predominant tissue presence

**Quality control**

Prepared set of biopsies for the training process

**Fig.3**

Step **30** of training the image feature representation module

Label: Gleason score 3

Label: Gleason score 3

Label: Gleason score 3

**Calculating the cost function and changing the CNN parameters for each patch separately until the cost function starts to grow or stabilises**

Global average pooling over the channels

Prediction: Gleason score 4

*n* patches from the preprocessed learning set with an assigned label, which is the label of the whole microscope picture

Single-layer classifier

Fig.4a

EP 4 075 325 A1

Step **40** of feature vector extraction for each patch

Label: Gleason score 3

Label: Gleason score 3

Label: Gleason score 3

Trained image feature representation module **300**

Global average pooling over the channels

A bag with *n* feature vectors of *n* patches

Redelivering of *n* patches from the preprocessed learning set to the trained image feature representation module **300**

Fig.4b

22

EP 4 075 325 A1

Fig.5a

Fig.5b

Fig.5c

Fig.6

Fig.7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RYMARCZYK DAWID ET AL: "Kernel Self-Attention for Weakly-supervised Image Classification using Deep Multiple Instance Learning", 2021 IEEE WINTER CONFERENCE ON APPLICATIONS OF COMPUTER VISION (WACV), IEEE, 3 January 2021 (2021-01-03), pages 1720-1729, XP033926293, DOI: 10.1109/WACV48630.2021.00176 [retrieved on 2021-05-03] * abstract * * sections 2-4; page 1721 - page 1726; figure 1 * | 1-14 | INV. G06K9/00 G06K9/62 G06K9/46 |
| A | US 2020/250398 A1 (COURTIOL PIERRE [FR] ET AL) 6 August 2020 (2020-08-06) * paragraph [0046] * | 2,5,7,10 | |
| A | EP 3 776 463 A1 (DYSIS MEDICAL LTD [GB]) 17 February 2021 (2021-02-17) * paragraph [0016] * * paragraph [0065] - paragraph [0066] * * paragraph [0069] - paragraph [0072] * | 2,5,7,10 | TECHNICAL FIELDS SEARCHED (IPC) G06K |

The present search report has been drawn up for all claims

| Place of search | Date of completion of the search | Examiner |
|---|---|---|
| The Hague | 30 September 2021 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 46 1534

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2021

| Patent document cited in search report | | Publication date | Patent family member(s) | | Publication date |
|---|---|---|---|---|---|
| US 2020250398 | A1 | 06-08-2020 | US | 2020250398 A1 | 06-08-2020 |
| | | | US | 2021200989 A1 | 01-07-2021 |
| EP 3776463 | A1 | 17-02-2021 | AU | 2019311336 A1 | 12-11-2020 |
| | | | BR | 112020023281 A2 | 23-02-2021 |
| | | | CA | 3099180 A1 | 30-01-2020 |
| | | | CN | 112088394 A | 15-12-2020 |
| | | | DK | 3776463 T3 | 27-09-2021 |
| | | | EP | 3776463 A1 | 17-02-2021 |
| | | | JP | 2021520959 A | 26-08-2021 |
| | | | US | 2021249118 A1 | 12-08-2021 |
| | | | WO | 2020021261 A1 | 30-01-2020 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190295252 A

- WO 20222985 A

**Non-patent literature cited in the description**

- **ARPIT, DEVANSH et al.** A closer look at memorization in deep networks. *International Conference on Machine Learning, PMLR,* 2017

- **B. E. BEJNORDI ; M. VETA ; P. J. VAN DIEST ; B. VAN GINNEKEN ; N. KARSSEMEIJER ; G. LITJENS ; J. A. VAN DER LAAK ; M. HERMSEN ; Q. F. MANSON ; M. BALKENHOL et al.** Diagnostic assessment of deep learning algorithms for detection of lymph node metastases in women with breast cancer. *Jama,* 2017, vol. 318 (22), 2199-2210